(19) Europäisches Patentamt
European Patent Office
Office européen des brevets

(11) **EP 4 629 493 A1**

(12) **EUROPEAN PATENT APPLICATION**

(43) Date of publication:
**08.10.2025 Bulletin 2025/41**

(21) Application number: **25163541.3**

(22) Date of filing: **13.03.2025**

(51) International Patent Classification (IPC):
**H02M 1/00** $^{(2006.01)}$   **G05F 1/56** $^{(2006.01)}$
**H02M 3/155** $^{(2006.01)}$   **H02M 3/158** $^{(2006.01)}$
**H02M 3/07** $^{(2006.01)}$

(52) Cooperative Patent Classification (CPC):
**H02M 1/0025; G05F 1/56; H02M 1/0045;**
**H02M 1/007; H02M 1/008; H02M 3/1557;**
**H02M 3/158;** H02M 3/07

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **18.03.2024 US 202418607934**

(71) Applicant: **Analog Devices, Inc.**
**Wilmington, MA 01887 (US)**

(72) Inventors:
• **Zhang, Bin**
  **Wilmington, 01887 (US)**
• **Witt, Jeffrey Kingan**
  **Wilmington, 01887 (US)**
• **Chen, Hua**
  **Wilmington, 01887 (US)**
• **Chen, Qiwei**
  **Wilmington, 01887 (US)**

(74) Representative: **Wallin, Nicholas James**
**Withers & Rogers LLP**
**2 London Bridge**
**London SE1 9RA (GB)**

(54) **LOW-NOISE VOLTAGE REGULATORS AND ASSOCIATED METHODS**

(57) A low-noise voltage regulator includes (i) an error amplifier configured to generate an error signal that is proportional to a difference between a voltage at a ground node and a voltage at a set node, (ii) a reference resistor electrically coupled between an output power node and the set node, (iii) a capacitor is connected in parallel with the reference resistor, (iv) a reference current source electrically coupled to the set node, and (v) a control and power stage electrically coupled between an input power node and the output power node. The control and power stage is configured to convert an input voltage to an output voltage in response to the error signal to minimize a magnitude of the error signal.

FIG. 2

**EP 4 629 493 A1**

## Description

### PRIORITY CLAIM

This European patent application claims priority from United States Patent Application No. 18/607,934, filed 18 March 2024, the entire contents of which are incorporated herein by reference.

### BACKGROUND

A voltage regulator is a power supply which provides a regulated output voltage. Voltage regulators are used in a wide variety of applications, such as to provide electrical power within a specified voltage range to a load. Types of voltage regulators include switching voltage regulators and linear voltage regulators.

### BRIEF DESCRIPTION OF THE DRAWINGS

FIG. 1 is a schematic diagram of a voltage regulator where voltage reference noise and error amplifier noise are gained up by a voltage divider of the voltage regulator.
FIG. 2 is a schematic diagram of a low-noise voltage regulator, according to an embodiment.
FIG. 3 is a schematic diagram of the FIG. 2 low-noise voltage regulator illustrating two noise sources.
FIG. 4 is a schematic diagram of an alternate embodiment of the FIG. 2 low-noise voltage regulator configured to generate a negative output voltage instead of a positive output voltage.
FIG. 5 is a schematic diagram of the FIG. 2 low-noise voltage regulator where a voltage source is embodied by a charge pump and a linear regulator.
FIG. 6 is a schematic diagram of the FIG. 4 low-noise voltage regulator where a voltage source is embodied by a linear regulator.
FIG. 7 is a schematic diagram of an embodiment of the FIG. 2 low-noise voltage regulator having a boost topology.
FIG. 8 is a schematic diagram of an embodiment of the FIG. 4 low-noise voltage regulator having a buck-boost topology.
FIG. 9 is a schematic diagram of an embodiment of the FIG. 2 low-noise voltage regulator having a single-ended primary inductor converter (SEPIC) topology.
FIG. 10 is a schematic diagram of an embodiment of the FIG. 4 low-noise voltage regulator having a low-dropout linear regulator topology.
FIG. 11 is a schematic diagram of a multi-output, low-noise voltage regulator, according to an embodiment.
FIG. 12 is a schematic diagram of an embodiment of the FIG. 11 low-noise voltage regulator where each power stage is embodied by a linear regulator.
FIG. 13 is a schematic diagram of another multi-output, low-noise voltage regulator, according to an embodiment.
FIG. 14 is a schematic diagram of an embodiment of the FIG. 13 low-noise voltage regulator including blocks sharing a common input power node.
FIG. 15 is a schematic diagram of an embodiment of the FIG. 13 low-noise voltage regulator including blocks electrically coupled in series.

### DETAILED DESCRIPTION OF THE EMBODIMENTS

Some voltage regulator applications require low electrical noise. In these applications, electrical noise on an output of a voltage regulator may cause improper operation of circuitry powered by the voltage regulator. For example, noise on an output of a voltage regulator powering precision measurement circuitry may prevent the measurement circuitry from discerning a small change in a measured parameter. As another example, noise on an output of a voltage regulator powering a linear amplifier may result in undesired noise on an output of the linear amplifier.

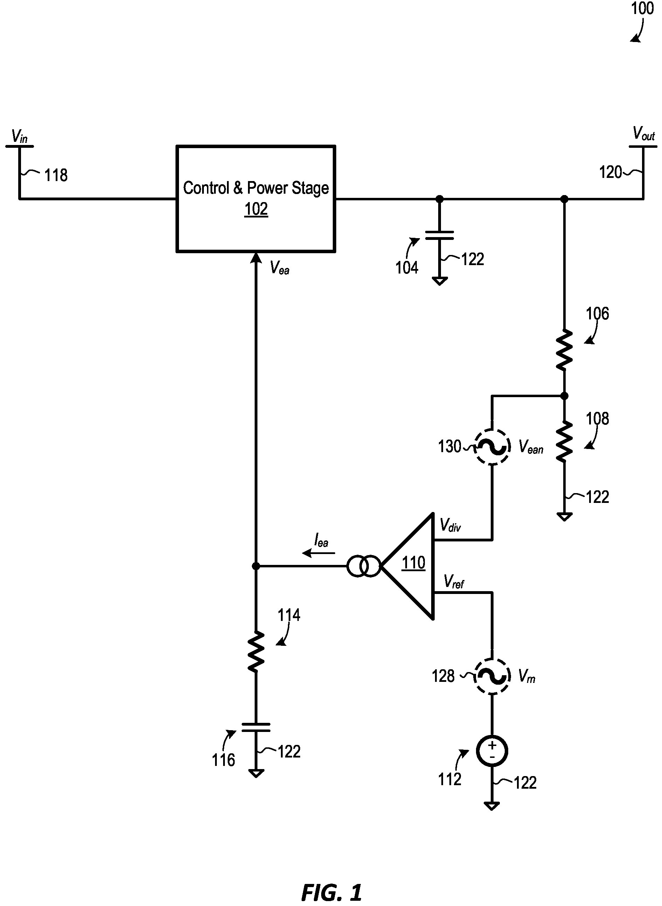

A conventional voltage regulator, though, may exhibit significant noise on its output due to amplification of noise from a voltage reference of the voltage regulator, as well as from amplification of noise of an error amplifier of the voltage regulator. For example, FIG. 1 is a schematic diagram of a voltage regulator 100 where voltage reference noise and error amplifier noise are amplified, i.e., "gained up," by a voltage divider of the voltage regulator. Voltage regulator 100 includes a control and power stage 102, an output capacitor 104, a first resistor 106, a second resistor 108, an error amplifier 110, a voltage reference 112, a resistor 114, and a capacitor 116. Control and power stage 102 is electrically coupled between an input power node 118 and an output power node 120. A load (not shown) may be connected to output power node 120. Control and power stage 102 includes a power stage (not shown), such as a switching power converter power stage or a linear regulator power stage, and associated control circuitry (not shown). Output capacitor 104 is electrically coupled between output power node 120 and a ground node 122. Control and power stage 102 converts an input voltage $V_{in}$ on input power node 118 to an output voltage $V_{out}$ on output power node 120.

Resistor 106 and resistor 108 collectively form a voltage divider which divides down voltage $V_{out}$ on output power node 120 to a divider voltage $V_{div}$. Error amplifier 110, which is a transconductance amplifier, is configured to generate a current error signal $I_{ea}$ proportional to a difference between divider voltage $V_{div}$ and a voltage $V_{ref}$ of voltage reference 112. Resistor 114 and capacitor 116 collectively integrate current error signal $I_{ea}$ to generate a voltage error signal $V_{ea}$, which is provided to control and power stage 102. Control and power stage 102 regulates magnitude of output voltage $V_{out}$ to minimize magnitude of current error signal $I_{ea}$,.

Magnitude of output voltage $V_{out}$ is determined by EQN. 1 below, where $R_{106}$ is resistance of resistor 106 and $R_{108}$ is resistance of resistor 108. As evident from EQN. 1, magnitude of output voltage $V_{out}$ can be set by selection of resistors 106 and 108.

$$V_{out} = V_{ref} \cdot \frac{(R_{106} + R_{108})}{R_{108}} \quad (\text{EQN. } 1)$$

While inclusion of resistors 106 and 108 in voltage regulator 100 promotes flexibility in setting magnitude of output voltage $V_{out}$, the resistors also increase magnitude of electrical noise on output power node 120. In particular, FIG. 1 shows a noise source 128 and a noise source 130 electrically coupled to respective inputs of error amplifier 110. Noise source 128 represents noise $V_{rn}$ of voltage reference 112, and noise source 130 represents noise $V_{ean}$ of error amplifier 110. While noise sources 128 and 130 are shown as discrete elements, it should be realized that noise sources 128 and 130 are not physical elements but instead represent noise generated internal to voltage reference 112 and error amplifier 110, respectively. EQN. 2 below represents feedback gain $G$ realized by resistors 106 and 108, and EQN. 3 represents noise $V_{out\_n}$ on output power node 120 from noise $V_{rn}$ and noise $V_{ea}$. As evident from EQN. 3, feedback gain $G$ from resistors 106 and 108 gains up noise $V_{rn}$ of voltage reference 112 and noise $V_{ea}$ of error amplifier 110 on output power node 120. As such, voltage regulator 100 may not be suitable for applications requiring low power supply noise.

$$G = \frac{(R_{106} + R_{108})}{R_{108}} \quad (\text{EQN. } 2)$$

$$V_{out\_noise} = \sqrt{(G \cdot V_{ean})^2 + (G \cdot V_{rn})^2} \quad (\text{EQN. } 3)$$

Disclosed herein are new low-noise voltage regulators and associated methods which may at least partially overcome the above-discussed problems with conventional voltage regulators. The new voltage regulators, for example, regulate input ports of an error amplifier to ground and do not require use of a voltage divider connected to an error amplifier input port. Accordingly, particular embodiments of the new low-noise voltage regulators are capable of operation without amplification of reference noise or amplification of error amplifier noise, which promotes low electrical noise on an output power node of the voltage regulators. Additionally, a capacitor is connected from output to an error amplifier input port to reduce the output noise. Additionally, certain embodiments of the new voltage regulators are capable of operating over a wide range of input voltage magnitude, e.g., when input voltage magnitude is less than or equal to output voltage magnitude. Furthermore, in some embodiments, minimum output voltage magnitude is not limited by voltage of a voltage reference. Moreover, particular embodiments are capable of supporting negative output voltages. Additionally, some embodiments are capable of generating multiple output voltages. Therefore, the new voltage regulators significantly advance the state of the art of low-noise voltage regulation.

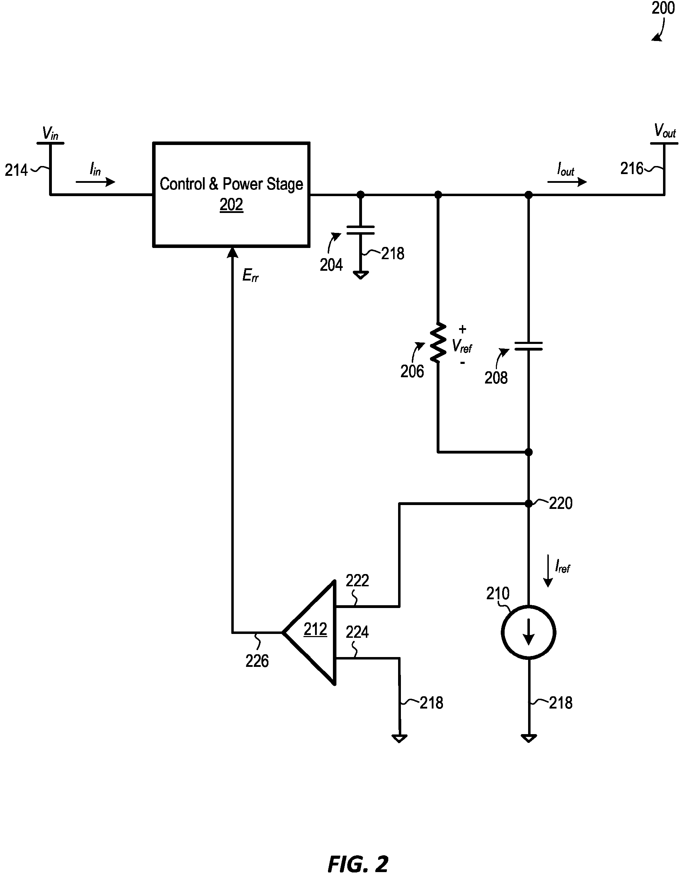

FIG. 2 is a schematic diagram of a low-noise voltage regulator 200, which is one embodiment of the new low-noise voltage regulators disclosed herein. Low-noise voltage regulator 200 includes a control and power stage 202, an output capacitor 204, a reference resistor 206, a reference capacitor 208, a reference current source 210, and an error amplifier 212. Control and power stage 202 is electrically coupled between an input power node 214 and an output power node 216. Output capacitor 204 is electrically coupled between output power node 216 and a ground node 218. In this document, a ground node is a reference electrical node that need not be the same as an earth ground or a chassis ground. Voltages in low-noise voltage regulator 200 are referenced to ground node 218, and ground node 218 therefore has a voltage of zero. Accordingly, a positive voltage in low-noise voltage regulator 200 has a higher electrical potential than ground node 218, and a negative voltage in low-noise voltage regulator 200 has a lower electrical potential than ground node 218. A load (not shown) is optionally electrically coupled to output power node 216 for being powered by low-noise voltage regulator 200. Output capacitor 204, for example, helps support a transient load on output power node 216 and/or helps absorb ripple current (if any) generated by control and power stage 202.

Each of reference resistor 206 and reference capacitor 208 is electrically coupled between output power node 216 and a set node 220, such that reference capacitor 208 is electrically coupled in parallel with reference resistor 206. Reference current source 210 is electrically coupled to set node 220. While FIG. 2 depicts reference current source 210 being electrically coupled between set node 220 and ground node 218, reference current source 210 could alternately be electrically coupled between set node 220 and or more other nodes in place of, or in addition to, ground node 218. An input port 222 of error amplifier 212 is connected to set node 220, and an input port 224 of error amplifier 212 is connected to ground node 218. An output port 226 of error amplifier 212 is electrically coupled to control and power stage 202.

An input current $I_{in}$ flows into low-noise voltage regulator 200 via input power node 214, and an output current $I_{out}$ flows out of low-noise regulator 200 via output power node 216. Input current $I_{in}$ and output current $I_{out}$ could have either a positive polarity or a negative polarity. Low-noise voltage regulator 200 has an input voltage $V_{in}$ on input power node 214 and an output voltage $V_{out}$ on output power node 216. Polarity of input voltage $V_{in}$ and output voltage $V_{out}$ could be either positive or negative, and in particular embodiments, input voltage $V_{in}$ and output voltage $V_{out}$ need not have the same polarity.

Input port 222 and input port 224 of error amplifier 212 each have a high input impedance, such that negligible current flows into these input ports. Additionally, a reference current signal $I_{ref}$ generated by reference current source 210 is a direct current (DC) signal, and reference current signal $I_{ref}$ therefore does not appreciably flow through reference capacitor 208 during steady state operation of low-noise voltage regulator 200. Consequently, essentially all of reference current signal $I_{ref}$ flows through reference resistor 206, thereby establishing a voltage $V_{ref}$ across reference resistor 206 according to EQN. 4 below, where $R_{ref}$ is resistance of reference resistor 206.

$$V_{ref} = I_{ref} \cdot R_{ref} \quad (\text{EQN. 4})$$

Error amplifier 212 is configured to generate an error signal $E_{rr}$ on its output port 226, where error signal $E_{rr}$ is proportional to a difference between voltage at set node 220 and voltage at ground node 218, and voltage at ground node 218 is zero because voltages in low-noise voltage regulator 200 are referenced to ground node 218. Error signal $E_{rr}$ could be either a voltage signal or a current signal, depending on the configuration of error amplifier 212. For example, in embodiments where error amplifier 212 is a voltage amplifier, error signal $E_{rr}$ may be a voltage signal, and in embodiments where error amplifier 212 is a transconductance amplifier, error signal $E_{rr}$ may be a current signal. Additionally, error amplifier 212 could alternately be configured such that error signal $E_{rr}$ is a signal other than an electrical signal, such as an optical signal or a radio frequency wireless signal.

Control and power stage 202 includes a power stage (not shown in FIG. 2), such as a switching power converter power stage or a linear regulator power stage, and optional associated control circuitry (not shown in FIG. 2). Control and power stage 202 is configured to convert an input voltage $V_{in}$ at input power node 214 to an output voltage $V_{out}$ at output power node 216 at least partially in response to error signal $E_{rr}$ generated by error amplifier 212, to minimize magnitude of error signal $E_{rr}$. Stated differently, control and power stage 202 controls magnitude of output voltage $V_{out}$ in a manner which minimizes magnitude of error signal $E_{rr}$. Additionally, input port 224 of error amplifier 212 is at a voltage of zero because input port 224 is connected to ground node 218. Accordingly, error amplifier 212 controls magnitude of output voltage $V_{out}$ via error signal $E_{rr}$ to regulate magnitude of voltage at set node 220 to zero. Consequently, magnitude of output voltage $V_{out}$ is equal to voltage $V_{ref}$ across reference resistor 206, and low-noise voltage regulator 200 indirectly regulates magnitude of output voltage $V_{out}$ by regulating magnitude of voltage on set node 220 to zero. As such, desired magnitude of output voltage $V_{out}$ is set according to EQN. 4 above, and desired magnitude of output voltage $V_{out}$ is realized by applying reference current signal $I_{ref}$ to reference resistor 206 to realize the desired output voltage magnitude across reference resistor 206. Reference capacitor 208 connected in parallel with reference resistor 206 reduces voltage noise across reference resistor 206. Magnitude of output voltage $V_{out}$ can therefore be varied by varying resistance $R_{ref}$ of reference resistor 206 and/or by varying magnitude of reference current signal $I_{ref}$. For example, magnitude of output voltage $V_{out}$ may be increased by increasing resistance $R_{ref}$ of reference resistor 206 and/or by increasing magnitude of reference current signal $I_{ref}$.

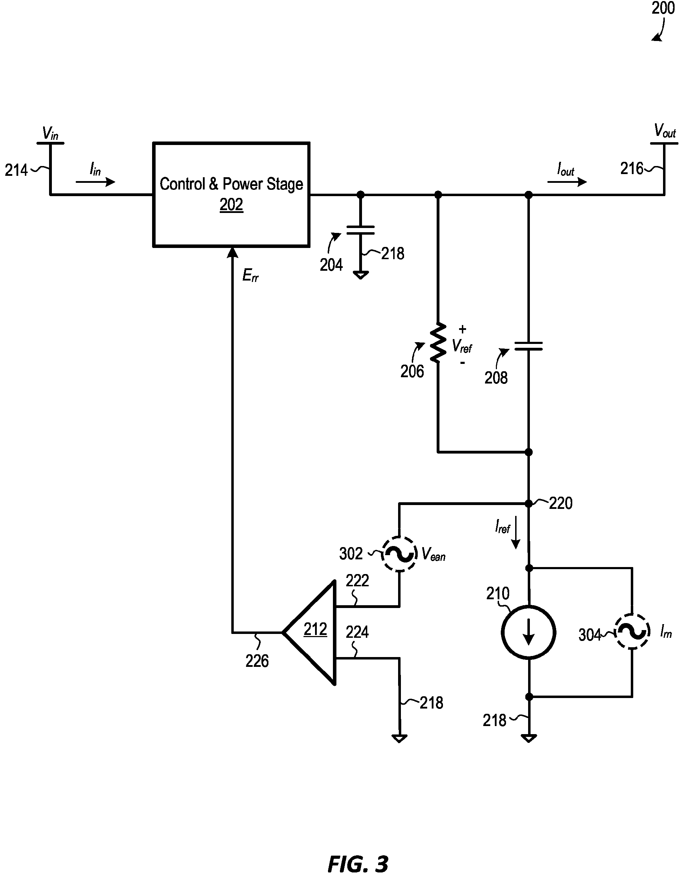

Importantly, the configuration of low-noise voltage regulator 200 promotes low magnitude of electrical noise on output power node 216. For example, consider FIG. 3, which is a schematic diagram of low-noise regulator 200 illustrating a noise source 302 and a noise source 304 electrically coupled to set node 220. Noise source 302 represents noise $V_{ean}$ of error amplifier 212, and noise source 304 represents noise $I_{rn}$ of reference current source 210. It should be noted that noise sources 302 and 304 are not physical elements but instead represent noise generated internal to error amplifier 212 and reference current source 210, respectively. In contrast with voltage regulator 100 of FIG. 1, magnitude of noise $V_{ean}$ and noise $I_{rn}$ are not gained up to output power node 216. Instead, low-noise voltage regulator 200 has a gain of unity of noise $V_{ean}$ and noise $I_{rn}$ with respect to output power node 216. Additionally, reference capacitor 208 helps filter noise across reference resistor 206. Additionally, the fact that set node 220 is regulated to ground node 218, which is at zero voltage and therefore has no noise, also promotes low noise. Consequently, low-noise voltage regulator 200 may have substantially lower noise on its output power node relative to a conventional voltage regulator with similar error amplifier and reference noise magnitudes.

Furthermore, low-noise voltage regulator 200 may achieve additional significant advantages. For example, some embodiments of low-noise voltage regulator 200 are capable of operating with magnitude of output voltage $V_{out}$ being greater than, or equal to, magnitude of voltage $V_{in}$. As another example, minimum value of output voltage $V_{out}$ magnitude voltage is not constrained by magnitude of a voltage reference. Instead, in particular embodiments, magnitude of output voltage $V_{out}$ can be essentially as low as desired with appropriate selection of reference resistor 206 resistance $R_{ref}$ and magnitude of reference current signal $I_{ref}$. As an additional example, certain embodiments of low-noise voltage regulator 200 are capable of operation with output voltage $V_{out}$ being a negative voltage, as well as with output voltage $V_{out}$ being a positive voltage.

Referring again to FIG. 2, reference current source 210 is configured to generate reference current signal $I_{ref}$ such that reference current signal $I_{ref}$ flows away from set node 220. Consequently, output voltage $V_{out}$ is positive with respect to ground node 218, or stated differently, output power node 216 is at a higher electrical potential than ground node 218. However, reference current source 210 could be modified so that reference current signal $I_{ref}$ has an opposite polarity.

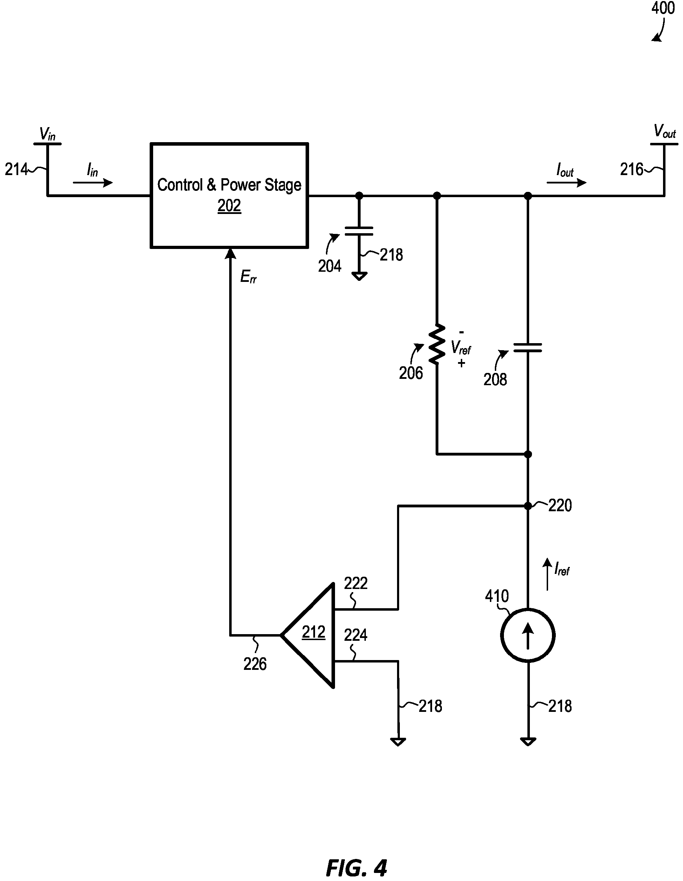

For example, FIG. 4 is a schematic diagram of a low-noise voltage regulator 400 which is an alternate embodiment of low-noise voltage regulator 200 (FIG. 2) where reference current source 210 is replaced with a reference current source 410. Reference current source 410 is configured to generate reference current signal $I_{ref}$ such that reference current signal $I_{ref}$ flows toward set node 220, instead of away from set node 220. Consequently, voltage $V_{ref}$ in low-noise voltage regulator 400 has a polarity that is opposite of a polarity of voltage $V_{ref}$ in low-noise voltage regulator 200. As a result, voltage $V_{out}$ is negative with respect to ground node 218 in low-noise voltage regulator 400, or stated differently, output power node 216 is at a lower electrical potential than ground node 218.

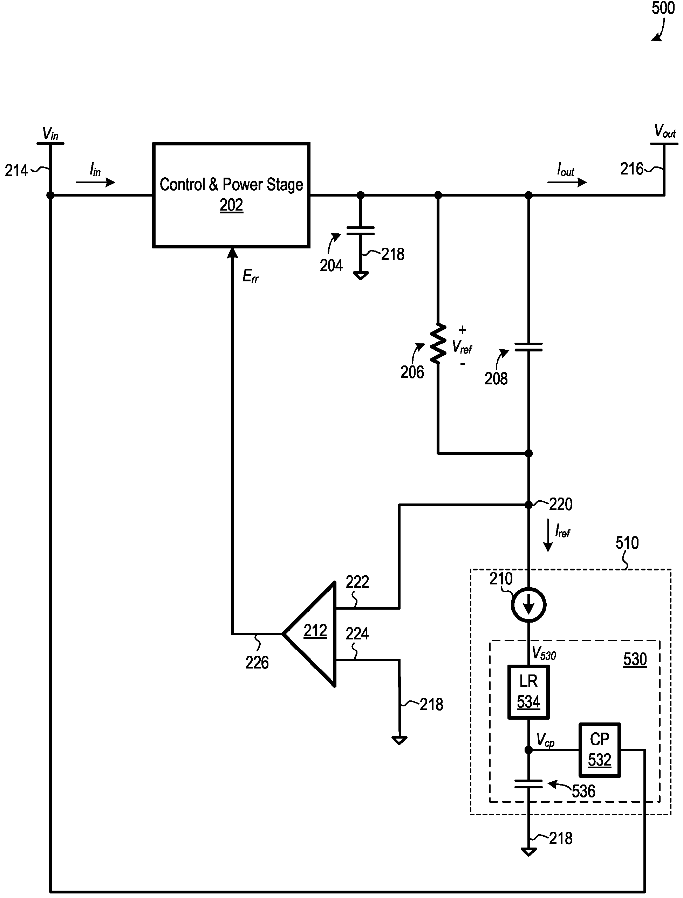

Some embodiments further include a voltage source in series with current source 210 (FIG. 2) or current source 410 (FIG. 4). For example, FIG. 5 is a schematic diagram of a low-noise voltage regulator 500, which is an embodiment of low-noise voltage regulator 200 of FIG. 2 further including a voltage source 530 electrically coupled in series with current source 210. Voltage source 530 includes a charge pump (CP) 532, a linear regulator (LR) 534, and a capacitor 536. Charge pump 532 is configured to convert a positive input voltage $V_{in}$ to a charge pump voltage $V_{cp}$ across capacitor 536, where voltage $V_{cp}$ is a negative voltage. Linear regulator 534 is configured to convert charge pump voltage $V_{cp}$ to voltage $V_{530}$ of voltage source 530. In some alternate embodiments of low-noise voltage regulator 500, linear regulator 534 is omitted and voltage $V_{530}$ is the same as voltage $V_{cp}$ generated by charge pump 532.

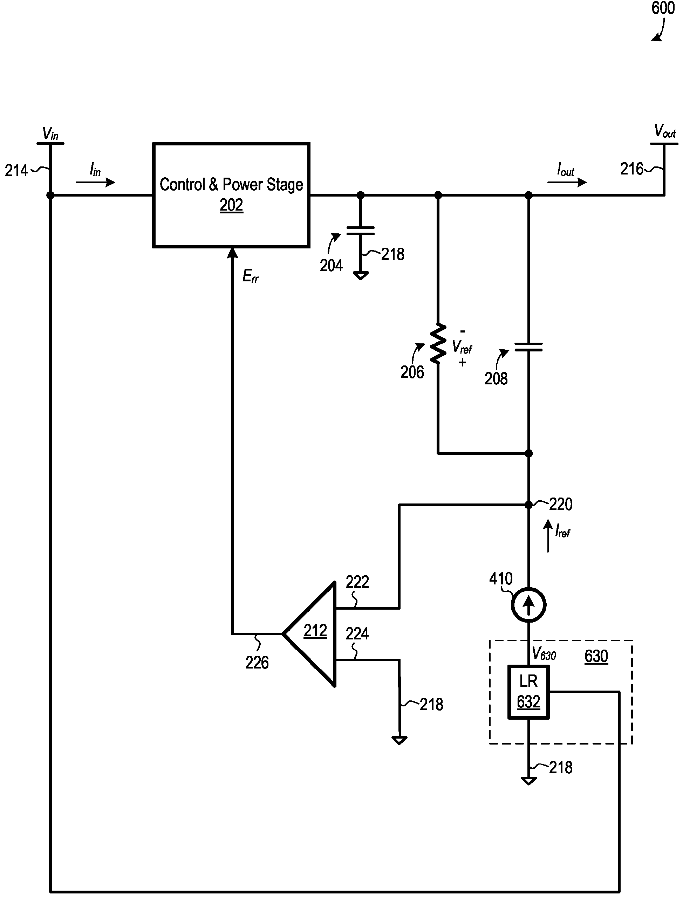

As another example, FIG. 6 is a schematic diagram of a low-noise voltage regulator 600, which is an embodiment of low-noise voltage regulator 400 of FIG. 4 further including a voltage source 630 electrically coupled in series with current source 410. Voltage source 630 includes a linear regulator 632 configured to convert a positive input voltage $V_{in}$ to a positive voltage $V_{630}$ of voltage source 630.

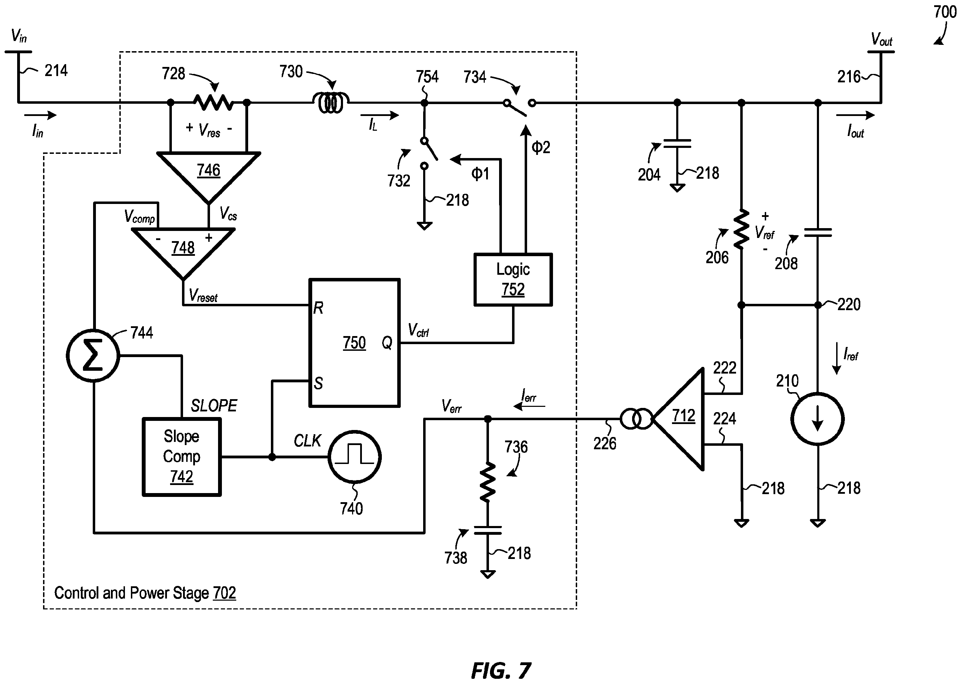

Referring again to FIG. 2, as discussed above, in some embodiments, control and power stage 202 includes a switching power converter stage or a linear regulator power stage. By way of example and not limitation, in some embodiments, control and power stage 202 includes a buck switching power converter stage, a boost switching power converter stage, a buck-boost switching power converter stage, a single-ended primary inductor converter (SEPIC) switching power converter stage, a Ćuk switching power converter stage, or a low-dropout linear regulator power stage. FIGS. 7-10, discussed below, illustrate several example embodiments of control and power stage 202. However, it is understood that control and power stage 202 is not limited to these example embodiments.

FIG. 7 is a schematic diagram of a low-noise voltage regulator 700, which is an embodiment of low-noise voltage regulator 200 (FIG. 2) having a boost topology, such that magnitude of output voltage $V_{out}$ is greater than or equal to magnitude of input voltage $V_{in}$. Control and power stage 202 of low-noise voltage regulator 200 is embodied by a control and power stage 702 in low-noise voltage regulator 700, and error amplifier 212 of low-noise voltage regulator 200 is embodied by an error amplifier 712 in low-noise voltage regulator 700. Error amplifier 712 is a transconductance amplifier, and error amplifier 712 is accordingly configured to generate a current error signal $I_{err}$, which is an embodiment of error signal $E_{rr}$ of low-noise voltage regulator 200.

Control and power stage 702 includes a current sense resistor 728, an inductor 730, a control switching device 732, a freewheeling switching device 734, a resistor 736, a capacitor 738, an oscillator 740, slope compensation circuitry 742, summation circuitry 744, a current sense amplifier 746, a comparator 748, an $S$-$R$ flip flop 750, and logic 752. Inductor 730, control switching device 732, and freewheeling switching device 734 collectively form a boost switching power converter power stage. Current sense resistor 728 and inductor 730 are electrically coupled in series between input power node 214 and a switching node 754. Control switching device 732 is electrically coupled between switching node 754 and ground node 218, and freewheeling switching device 734 is electrically coupled between switching node 754 and output power node 216. Control switching device 732 is controlled by a control signal Φ1 generated by logic 752 (discussed below), and freewheeling switching device 734 is controlled by a control signal Φ2 generated by logic 752. Each of control switching device 732 and freewheeling switching device 734 includes, for example, one or more transistors (e.g., a field effect transistor (FET), a bipolar junction transistor (BJT), or an insulated gate bipolar junction transistor (IGBT), and associated driver circuitry for the one or more transistors.

**EP 4 629 493 A1**

Current sense resistor 728, resistor 736, capacitor 738, oscillator 740, slope compensation circuitry 742, summation circuitry 744, current sense amplifier 746, comparator 748, *S-R* flip flop 750, and logic 752 collectively form control circuitry of control and power stage 702, which modulates a duty cycle of control switching device 732 in response to magnitude of current error signal $I_{err}$ to regulate magnitude of voltage at set node 220 to zero. In particular, resistor 736 and capacitor 738 are electrically coupled in series between output port 226 of error amplifier 712 and ground node 218, and resistor 736 and capacitor 738 therefore collectively integrate current error signal $I_{err}$ to generate a corresponding voltage error signal $V_{err}$. Oscillator 740 periodically asserts a clock signal *CLK* at a switching frequency of low-noise voltage regulator 700, and clock signal *CLK* is provided both to an S input of *S-R* flip flop 750 and to slope compensation circuitry 742. *S-R* flip flop 750 is accordingly set by assertion of clock signal *CLK*. Slope compensation circuitry 742 generates a slope compensation signal *SLOPE* based on clock signal *CLK*. Slope compensation signal *SLOPE* is, for example, a linear or non-linear slope signal, such as a ramp signal. Summation circuitry 744 adds slope compensation signal *SLOPE* to voltage error signal $V_{err}$ to generate a compensation signal $V_{comp}$.

Current sense amplifier 746 is configured to amplify a voltage $V_{res}$ across current sense resistor 728 to generate a signal $V_{cs}$ proportional to a current $I_L$ flowing through inductor 730. Comparator 748 compares current sense signal $V_{cs}$ to compensation signal $V_{comp}$, and comparator 748 asserts a reset signal $V_{reset}$ when magnitude of current sense signal $V_{cs}$ reaches magnitude of compensation signal $V_{comp}$. Reset signal $V_{reset}$ is provided to an R input of *S-R* flip flop 750, and *S-R* flip flop 750 is accordingly reset in response to assertion of reset signal $V_{reset}$. *S-R* flip flop 750 generates a control signal $V_{ctrl}$ on its output Q. Control signal $V_{ctrl}$ is asserted when S-R flip flop 750 is set, and control signal $V_{ctrl}$ is de-asserted when *S-R* flip flop 750 is reset. Accordingly, control signal $V_{ctrl}$ is a PWM signal with a duty cycle that minimizes magnitude of current error signal $I_{err}$ and thereby regulates voltage at set node 220 to zero. In this document, duty cycle of a switching device of a low-noise voltage regulator is a ratio of on-time of the switching device to a switching period of the low-noise voltage regulator.

Logic 752 is configured to generate controls signals Φ1 and Φ2 based on control signal $V_{ctrl}$. Specifically, logic 752 asserts control signal Φ1 when control signal $V_{ctrl}$ is asserted, and logic 752 de-asserts controls signal Φ1 when control signal $V_{ctrl}$ is de-asserted. Control switching device 732 operates in its on-state (conductive state) when control signal Φ1 is asserted, and control switching device 732 operates in its off-state (non-conductive state) when control signal Φ1 is de-asserted. Additionally, logic 752 generates control signal Φ2 such that it is complementary to control signal Φ1. Freewheeling switching device 734 operates in its on-state (conductive state) when control signal Φ2 is asserted, and freewheeling switching device 734 operates in its off-state (non-conductive state) when control signal Φ2 is de-asserted. Freewheeling switching device 734 provides a path for current flowing through inductor 730 when control switching device 732 is in its off-state. In some embodiments, logic 752 inserts deadtime between assertion of control signal Φ1 and assertion of control signal Φ2, and/or vice versa, to help prevent simultaneous operation of control switching device 732 and freewheeling switching device 734 in their respective on-states. In some alternate embodiments, freewheeling switching device 734 is replaced with a diode, and in these alternate embodiments, logic 752 need not generate control signal Φ2, or logic 752 may be omitted.

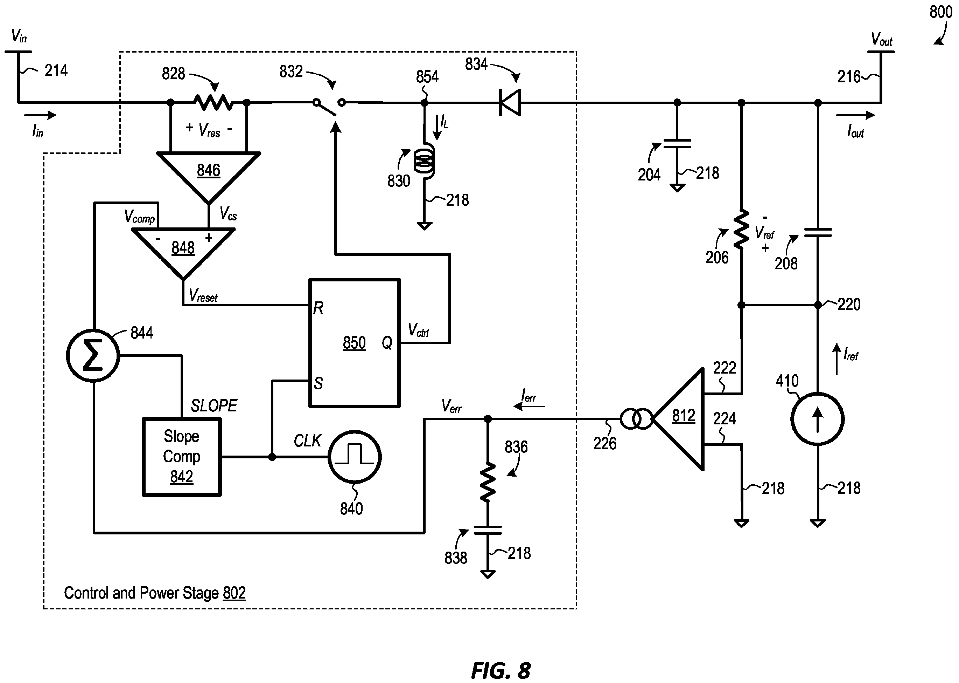

FIG. 8 is a schematic diagram of a low-noise voltage regulator 800, which is an embodiment of low-noise voltage regulator 400 (FIG. 4) having a buck-boost topology. Accordingly, magnitude of output voltage $V_{out}$ may be greater than, equal to, or less than, magnitude of input voltage $V_{in}$. However, polarity of output voltage $V_{out}$ is opposite of polarity of input voltage $V_{in}$. For example, if $V_{in}$ is a positive voltage, $V_{out}$ is a negative voltage. FIG. 8 is drawn assuming that input voltage $V_{in}$ is a positive voltage and output voltage $V_{out}$ is a negative voltage.

Control and power stage 202 of low-noise voltage regulator 400 is embodied by a control and power stage 802 in low-noise voltage regulator 800, and error amplifier 212 of low-noise voltage regulator 400 is embodied by an error amplifier 812 in low-noise voltage regulator 800. Error amplifier 812 is a transconductance amplifier, and error amplifier 812 is accordingly configured to generate a current error signal $I_{err}$, which is an embodiment of error signal $E_{rr}$ of low-noise voltage regulator 400.

Control and power stage 802 includes a current sense resistor 828, an inductor 830, a control switching device 832, a freewheeling diode 834, a resistor 836, a capacitor 838, an oscillator 840, slope compensation circuitry 842, summation circuitry 844, a current sense amplifier 846, a comparator 848, and an *S-R* flip flop 850. Inductor 830, control switching device 832, and freewheeling diode 834 collectively form a buck-boost switching power converter power stage. Current sense resistor 828 and control switching device 832 are electrically coupled in series between input power node 214 and a switching node 854. Inductor 830 is electrically coupled between switching node 854 and ground node 218, and freewheeling diode 834 is electrically coupled between switching node 854 and output power node 216. Control switching device 832 is controlled by a control signal $V_{ctrl}$ generated by *S-R* flip flop 850 (discussed below). Control switching device 832 includes, for example, one or more transistors (e.g., a FET, a BJT, or an IGBT) and associated driver circuitry for the one or more transistors.

Current sense resistor 828, resistor 836, capacitor 838, oscillator 840, slope compensation circuitry 842, summation circuitry 844, current sense amplifier 846, comparator 848, and *S-R* flip flop 850 collectively form control circuitry of control and power stage 802 which modulates a duty cycle of control switching device 832 in response to magnitude of current error signal $I_{err}$ to regulate magnitude of voltage at set node 220 to zero. In particular, resistor 836 and capacitor 838 are electrically coupled in series between output port 226 of error amplifier 812 and ground node 218, and resistor 836 and capacitor 838 therefore collectively integrate current error signal $I_{err}$ to generate a corresponding voltage error signal $V_{err}$. Oscillator 840 periodically asserts a clock signal *CLK* at a switching frequency of low-noise voltage regulator 800, and clock signal *CLK* is provided both to an S input of *S-R* flip flop 850 and to slope compensation circuitry 842. *S-R* flip flop 850 is accordingly set by assertion of clock signal *CLK*. Slope compensation circuitry 842 generates a slope compensation signal *SLOPE* based on clock signal *CLK*. Slope compensation signal *SLOPE* is, for example, a linear or non-linear slope signal, such as a ramp signal. Summation circuitry 844 adds slope compensation signal *SLOPE* to voltage error signal $V_{err}$ to generate a compensation signal $V_{comp}$.

Current sense amplifier 846 is configured to amplify a voltage $V_{res}$ across current sense resistor 828 to generate a signal $V_{cs}$ proportional to a current $I_L$ flowing through inductor 830 while control switching device 832 is in its on-state. Comparator 848 compares current sense signal $V_{cs}$ to compensation signal $V_{comp}$, and comparator 848 asserts a reset signal $V_{reset}$ when magnitude of current sense signal $V_{cs}$ reaches magnitude of compensation signal $V_{comp}$. Reset signal $V_{reset}$ is provided to an R input of *S-R* flip flop 850, and *S-R* flip flop 850 is accordingly reset in response to assertion of reset signal $V_{reset}$. *S-R* flip flop 850 generates a control signal $V_{ctrl}$ on its output Q. Control signal $V_{ctrl}$ is asserted when *S-R* flip flop 850 is set, and control signal $V_{ctrl}$ is de-asserted when *S-R* flip flop 850 is reset. Accordingly, control signal $V_{ctrl}$ is a PWM signal with a duty cycle that minimizes magnitude of current error signal $I_{err}$ and thereby regulates voltage at set node 220 to zero.

Control switching device 832 is controlled by control signal $V_{ctrl}$. Specifically, control switching device 832 operates in its on-state (conductive state) when control signal $V_{ctrl}$ is asserted, and control switching device 832 operates in its off-state (non-conductive state) when control signal $V_{ctrl}$ is de-asserted. Freewheeling diode 834 provides a path for current $I_L$ when control switching device 832 is in its off-state. In some alternate embodiments, freewheeling diode 834 is replaced with a freewheeling switching device, and control and power stage 802 is modified to generate a control signal to control the freewheeling switching device.

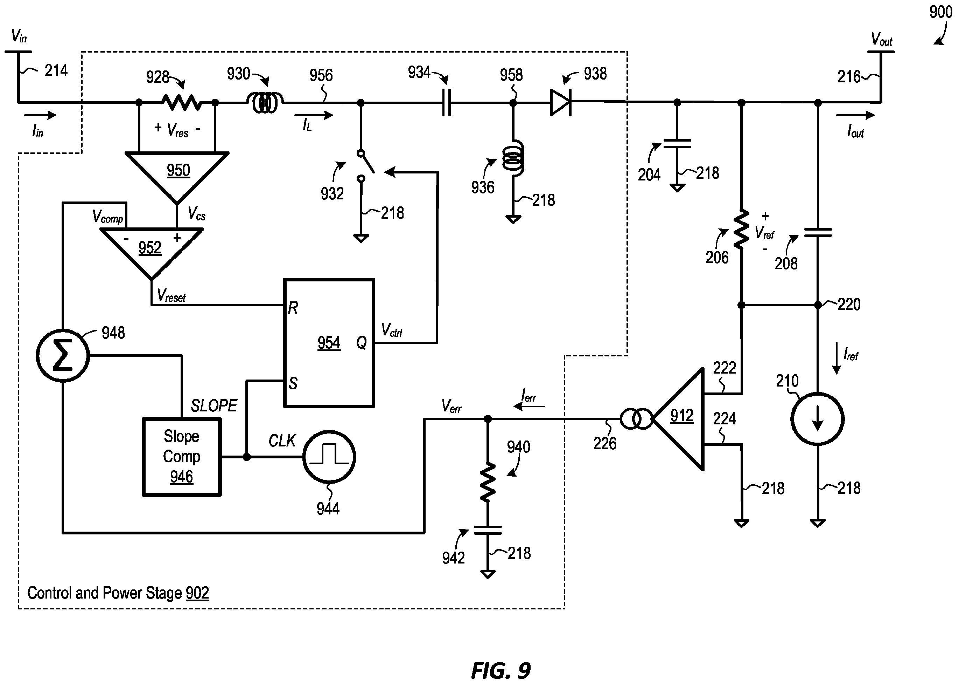

FIG. 9 is a schematic diagram of a low-noise voltage regulator 900, which is an embodiment of low-noise voltage regulator 200 (FIG. 2) having a SEPIC topology. Accordingly, magnitude of output voltage $V_{out}$ may greater than, equal to, or less than, magnitude of input voltage $V_{in}$. In contrast to the FIG. 8 low-noise voltage regulator, polarity of output voltage $V_{out}$ is the same as polarity of input voltage $V_{in}$ in low-noise voltage regulator 900. FIG. 9 is drawn assuming that each of input voltage $V_{in}$ and output voltage $V_{out}$ are positive voltages.

Control and power stage 202 of low-noise voltage regulator 200 is embodied by a control and power stage 902 in low-noise voltage regulator 900, and error amplifier 212 of low-noise voltage regulator 200 is embodied by an error amplifier 912 in low-noise voltage regulator 900. Error amplifier 912 is a transconductance amplifier, and error amplifier 912 is accordingly configured to generate a current error signal $I_{err}$, which is an embodiment of error signal $E_{rr}$ of low-noise voltage regulator 200.

Control and power stage 902 includes a current sense resistor 928, a first inductor 930, a control switching device 932, a capacitor 934, a second inductor 936, a diode 938, a resistor 940, a capacitor 942, an oscillator 944, slope compensation circuitry 946, summation circuitry 948, a current sense amplifier 950, a comparator 952, and an *S-R* flip flop 954. First inductor 930, control switching device 932, capacitor 934, second inductor 936, and diode 938 collectively form a SEPIC switching power converter power stage. Current sense resistor 928 and first inductor 930 are electrically coupled in series between input power node 214 and a first switching node 956. Control switching device 932 is electrically coupled between first switching node 956 and ground node 218, and capacitor 934 is electrically coupled between first switching node 956 and a second switching node 958. Second inductor 936 is electrically coupled between second switching node 958 and ground node 218, and diode 938 is electrically coupled between second switching node 958 and output power node 216. Control switching device 932 is controlled by a control signal $V_{ctrl}$ generated by *S-R* flip flop 954 (discussed below). Control switching device 932 includes, for example, one or more transistors (e.g., a FET, a BJT, or an IGBT) and associated driver circuitry for the one or more transistors.

Current sense resistor 928, resistor 940, capacitor 942, oscillator 944, slope compensation circuitry 946, summation circuitry 948, current sense amplifier 950, comparator 952, and *S-R* flip flop 954 collectively form control circuitry of control and power stage 902 which modulates a duty cycle of control switching device 932 in response to magnitude of current error signal $I_{err}$ to regulate magnitude of voltage at set node 220 to zero. In particular, resistor 940 and capacitor 942 are electrically coupled in series between output port 226 of error amplifier 912 and ground node 218, and resistor 940 and capacitor 942 therefore collectively integrate current error signal $I_{err}$ to generate a corresponding voltage error signal $V_{err}$. Oscillator 944 periodically asserts a clock signal *CLK* at a switching frequency of low-noise voltage regulator 900, and clock signal *CLK* is provided both to an S input of *S-R* flip flop 954 and to slope compensation circuitry 946. *S-R* flip flop 954 is accordingly set by assertion of clock signal *CLK*. Slope compensation circuitry 946 generates a slope compensation signal *SLOPE* based on clock signal *CLK*. Slope compensation signal *SLOPE* is, for example, a linear or non-linear slope signal, such as a ramp signal. Summation circuitry 948 adds slope compensation signal *SLOPE* to voltage error signal $V_{err}$ to generate a compensation signal $V_{comp}$.

Current sense amplifier 950 is configured to amplify a voltage $V_{res}$ across current sense resistor 928 to generate a signal $V_{cs}$ proportional to a current $I_L$ flowing through first inductor 930 while control switching device 932 is in its on-state. Comparator 952 compares current sense signal $V_{cs}$ to compensation signal $V_{comp}$, and comparator 952 asserts a reset signal $V_{reset}$ when magnitude of current sense signal $V_{cs}$ reaches magnitude of compensation signal $V_{comp}$. Reset signal $V_{reset}$ is provided to an R input of S-R flip flop 954, and S-R flip flop 954 is accordingly reset in response to assertion of reset signal $V_{reset}$. S-R flip flop 954 generates a control signal $V_{ctrl}$ on its output Q. Control signal $V_{ctrl}$ is asserted when S-R flip flop 954 is set, and control signal $V_{ctrl}$ is de-asserted when S-R flip flop 954 is reset. Accordingly, control signal $V_{ctrl}$ is a PWM signal with a duty cycle that minimizes magnitude of current error signal $I_{err}$ and thereby regulates voltage at set node 220 to zero. Control switching device 932 is controlled by control signal $V_{ctrl}$. Specifically, control switching device 932 operates in its on-state (conductive state) when control signal $V_{ctrl}$ is asserted, and control switching device 932 operates in its off-state (non-conductive state) when control signal $V_{ctrl}$ is de-asserted.

Control circuitry of control and power stages 702, 802, and 902 of FIGS. 7, 8, and 9 could be modified. For example, any of control and power stages 702, 802, and 902 could be modified to remove current sensing circuitry and related elements and thereby operate according to a voltage mode control scheme instead of a current mode control scheme. As another example, any of control and power stages 702, 802, and 902 could be modified to operate according to a current mode control scheme other than peak current mode control, such as average current mode or valley current mode control.

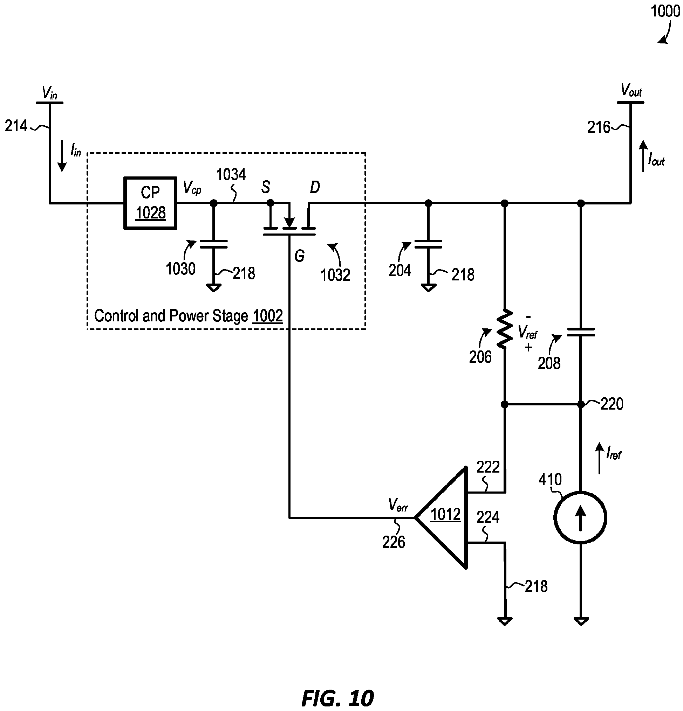

FIG. 10 is a schematic diagram of a low-noise voltage regulator 1000, which is an embodiment of low-noise voltage regulator 400 (FIG. 4) having a low-dropout linear regulator topology. In low-noise voltage regulator 1000, polarity of output voltage $V_{out}$ is negative, while polarity of input voltage $V_{in}$ is positive. Control and power stage 202 of low-noise voltage regulator 400 is embodied by a control and power stage 1002 in low-noise voltage regulator 1000, and error amplifier 212 of low-noise voltage regulator 400 is embodied by an error amplifier 1012 in low-noise voltage regulator 1000. Error amplifier 1012 is a voltage amplifier, and error amplifier 1012 is accordingly configured to generate a voltage error signal $V_{err}$, which is an embodiment of error signal $E_{rr}$ of low-noise voltage regulator 400.

Control and power stage 1002 includes a charge pump 1028, a capacitor 1030, and a transistor 1032. Charge pump 1028 is electrically coupled between input power node 214 and a charge pump node 1034, and capacitor 1030 is electrically coupled between charge pump node 1034 and ground node 218. Transistor 1032 is an N-channel enhancement mode FET including a source (S), a drain (D), and a gate (S). Source S of transistor 1032 is electrically coupled to charge pump node 1034, and drain D of transistor 1032 is electrically coupled to output power node 216. Gate G of transistor 1032 is electrically coupled to output port 226 of error amplifier 1012, and gate G of transistor 1032 is therefore driven by voltage error signal $V_{err}$.

Charge pump 1028 converts a positive voltage $V_{in}$ to a negative voltage $V_{cp}$ at charge pump node 1034. Transistor 1032 operates as a variable resistor under the control error amplifier 1012 to convert voltage $V_{cp}$ to output voltage $V_{out}$. Specifically, error amplifier 1012 controls transistor 1032 via voltage error signal $V_{err}$ to regulate magnitude of voltage at set node 220 to zero, such that output voltage $V_{out}$ is a negative voltage with a magnitude of voltage $V_{ref}$ across reference resistor 206. Transistor 1032 could be replaced with a different type of transistor, such as a different type of FET or a BJT, with appropriate changes to error amplifier 1012 and/or control and power stage 1002.

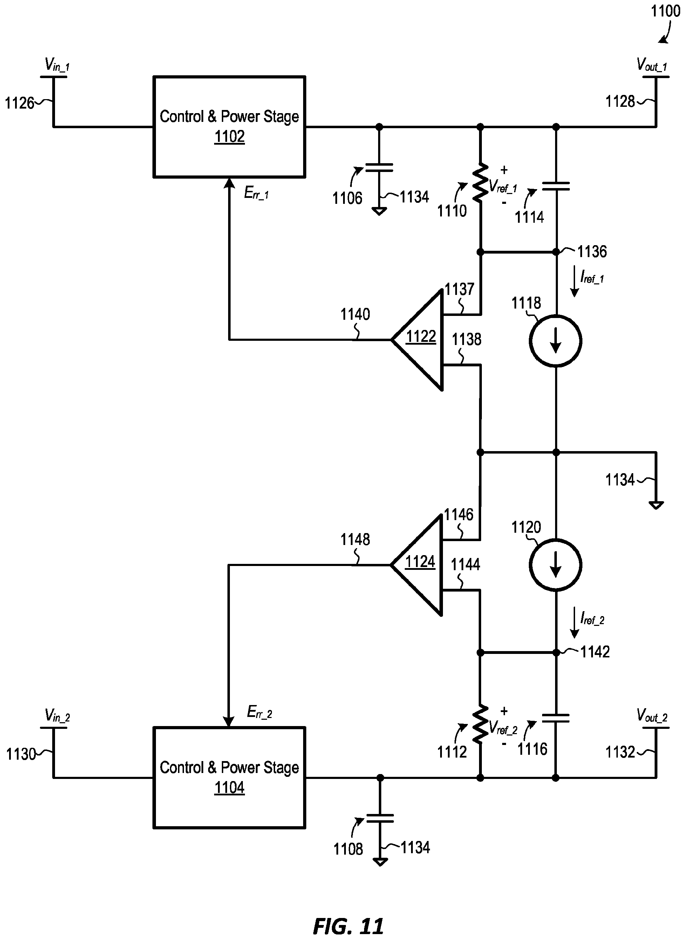

The new low-noise voltage regulators disclosed herein can have multiple outputs. For example, FIG. 11 is a schematic diagram of a multi-output, low-noise voltage regulator 1100, which is another embodiment of the new low-noise voltage regulators disclosed herein. Low-noise voltage regulator 1100 includes a first control and power stage 1102, a second control and power stage 1104, a first output capacitor 1106, a second output capacitor 1108, a first reference resistor 1110, a second reference resistor 1112, a first reference capacitor 1114, a second reference capacitor 1116, a first reference current source 1118, a second reference current source 1120, a first error amplifier 1122, and a second error amplifier 1124. First control and power stage 1102 is electrically coupled between a first input power node 1126 and a first output power node 1128, and second control and power stage 1104 is electrically coupled between a second input power node 1130 and a second output power node 1132. First output capacitor 1106 is electrically coupled between first output power node 1128 and a ground node 1134, and second output capacitor 1108 is electrically coupled between second output power node 1132 and ground node 1134. Voltages in low-noise voltage regulator 1100 are referenced to ground node 1134, and ground node 1134 therefore has a voltage of zero. Accordingly, a positive voltage in low-noise voltage regulator 1100 has a higher electrical potential than ground node 1134, and a negative voltage in low-noise voltage regulator 1100 has a lower electrical potential than ground node 1134.

Low-noise voltage regulator 1100 has a positive first input voltage $V_{in\_1}$ at first input power node 1126, and low-noise voltage regulator 1100 has a positive first output voltage $V_{out\_1}$ at first output power node 1128. First control and power stage 1102, first output capacitor 1106, first reference resistor 1110, first reference capacitor 1114, first reference current source 1118, and first error amplifier 1122 are collectively configured to generate first output voltage $V_{out\_1}$ from first input voltage $V_{in\_1}$. Specifically, each of first reference resistor 1110 and first reference capacitor 1114 is electrically coupled between first output power node 1128 and a first set node 1136. First reference current source 1118 is electrically coupled to first set node 1136. While FIG. 11 depicts first reference current source 1118 being electrically coupled between first set node 1136 and ground node 1134, first reference current source 1118 could alternately be electrically coupled between first set node 1136 and or more other nodes in place of, or in addition to, ground node 1134. An input port 1137 of first error amplifier 1122 is connected to first set node 1136, and an input port 1138 of first error amplifier 1122 is connected to ground node 1134. An output port 1140 of first error amplifier 1122 is electrically coupled to first control and power stage 1102.

In a manner analogous to that discussed above with respect to reference current signal $I_{ref}$ of FIG. 2, essentially all of a first reference current signal $I_{ref\_1}$ flows through first reference resistor 1110, thereby establishing a voltage $V_{ref\_1}$ across first reference resistor 1110 according to EQN. 5 below, where $R_{ref\_1}$ is resistance of first reference resistor 1110.

$$V_{ref\_1} = I_{ref\_1} \cdot R_{ref\_1} \quad (EQN. 5)$$

First error amplifier 1122 is configured to generate a first error signal $E_{rr\_1}$ on its output port 1140, where first error signal $E_{rr\_1}$ is proportional to a difference between voltage at first set node 1136 and voltage at ground node 1134. First error signal $E_{rr\_1}$ could be a voltage signal, a current signal, or other type of signal, depending on the configuration of first error amplifier 1122. First control and power stage 1102 includes a power stage (not shown in FIG. 11), such as a switching power converter power stage or a linear regulator power stage, and optional associated control circuitry (not shown in FIG. 11), analogous to control and power stage 202 of FIG. 2. First control and power stage 1102 is configured to convert first input voltage $V_{in\_1}$ to first output voltage $V_{out\_1}$ at least partially in response to first error signal $E_{rr\_1}$ generated by first error amplifier 1122, to minimize magnitude of first error signal $E_{rr\_1}$. Accordingly, first error amplifier 1122 controls magnitude of first output voltage $V_{out\_1}$ via first error signal $E_{rr\_1}$ to regulate magnitude of voltage at first set node 1136 to zero. Consequently, magnitude of first output voltage $V_{out\_1}$ is equal to voltage $V_{ref\_1}$ across first reference resistor 1110, and low-noise voltage regulator 1100 indirectly regulates magnitude of first output voltage $V_{out\_1}$ by regulating magnitude of voltage on first set node 1136 to zero. As such, magnitude of first output voltage $V_{out\_1}$ is set according to EQN. 5 above.

Low-noise voltage regulator 1100 achieves low electrical noise on first output power node 1128 for reasons analogous to those discussed above with respect to low-noise voltage regulator 200 of FIG. 2. For example, low-noise voltage regulator 1100 has a gain of unity of noise from first error amplifier 1122 and noise of first reference current source 1118 with respect to first output power node 1128. As another example, first reference capacitor 1114 helps filter noise across first reference resistor 1110.

Low-noise voltage regulator 1100 has a negative second input voltage $V_{in\_2}$ at second input power node 1130, and low-noise voltage regulator 1100 has a negative second output voltage $V_{out\_2}$ at second output power node 1132. Second control and power stage 1104, second output capacitor 1108, second reference resistor 1112, second reference capacitor 1116, second reference current source 1120, and second error amplifier 1124 are collectively configured to generate second output voltage $V_{out\_2}$ from second input voltage $V_{in\_2}$. Specifically, each of second reference resistor 1112 and second reference capacitor 1116 is electrically coupled between second output power node 1132 and a second set node 1142. Second reference current source 1120 is electrically coupled to second set node 1142. While FIG. 11 depicts second reference current source 1120 being electrically coupled between second set node 1142 and ground node 1134, second reference current source 1120 could alternately be electrically coupled between second set node 1142 and or more other nodes in place of, or in addition to, ground node 1134. An input port 1144 of second error amplifier 1124 is connected to second set node 1142, and an input port 1146 of second error amplifier 1124 is connected to ground node 1134. An output port 1148 of second error amplifier 1124 is electrically coupled to second control and power stage 1104.

In a manner analogous to that discussed above with respect to reference current signal $I_{ref}$ of FIG. 2, essentially all of a second reference current signal $I_{ref\_2}$ flows through second reference resistor 1112, thereby establishing a voltage $V_{ref\_2}$ across second reference resistor 1112 according to EQN. 6 below, where $R_{ref\_2}$ is resistance of second reference resistor 1112.

$$V_{ref\_2} = I_{ref\_2} \cdot R_{ref\_2} \quad (EQN. 6)$$

Second error amplifier 1124 is configured to generate a second error signal $E_{rr\_2}$ on its output port 1148, where second error signal $E_{rr\_2}$ is proportional to a difference between voltage at second set node 1142 and voltage at ground node 1134. Second error signal $E_{rr\_2}$ could be a voltage signal, a current signal, or other type of signal, depending on the configuration of second error amplifier 1124. Second control and power stage 1104 includes a power stage (not shown in FIG. 11), such as a switching power converter power stage or a linear regulator power stage, and optional associated control circuitry (not shown in FIG. 11), analogous to control and power stage 202 of FIG. 2. Second control and power stage 1104 is configured to convert second input voltage $V_{in\_2}$ to second output voltage $V_{out\_2}$ at least partially in response to second error signal $E_{rr\_2}$ generated by second error amplifier 1124, to minimize magnitude of second error signal $E_{rr\_2}$. Accordingly, second error amplifier 1124 controls magnitude of second output voltage $V_{out\_2}$ via second error signal $E_{rr\_second}$ to regulate magnitude of voltage at second set node 1142 to zero. Consequently, magnitude of second output voltage $V_{out\_2}$ is equal to voltage $V_{ref\_2}$ across second reference resistor 1112, and low-noise voltage regulator 1100 indirectly regulates magnitude of second output voltage $V_{out\_2}$ by regulating magnitude of voltage on second set node 1142 to zero. As such, magnitude of second output voltage $V_{out\_2}$ is set according to EQN. 6 above

Low-noise voltage regulator 1100 achieves low electrical noise on second output power node 1132 for reasons analogous to those discussed above with respect to low-noise voltage regulator 200 of FIG. 2. For example, low-noise voltage regulator 1100 has a gain of unity of noise from second error amplifier 1124 and noise of second reference current source 1120 with respect to second output power node 1132. As another example, second reference capacitor 1116 helps filter noise across second reference resistor 1112.

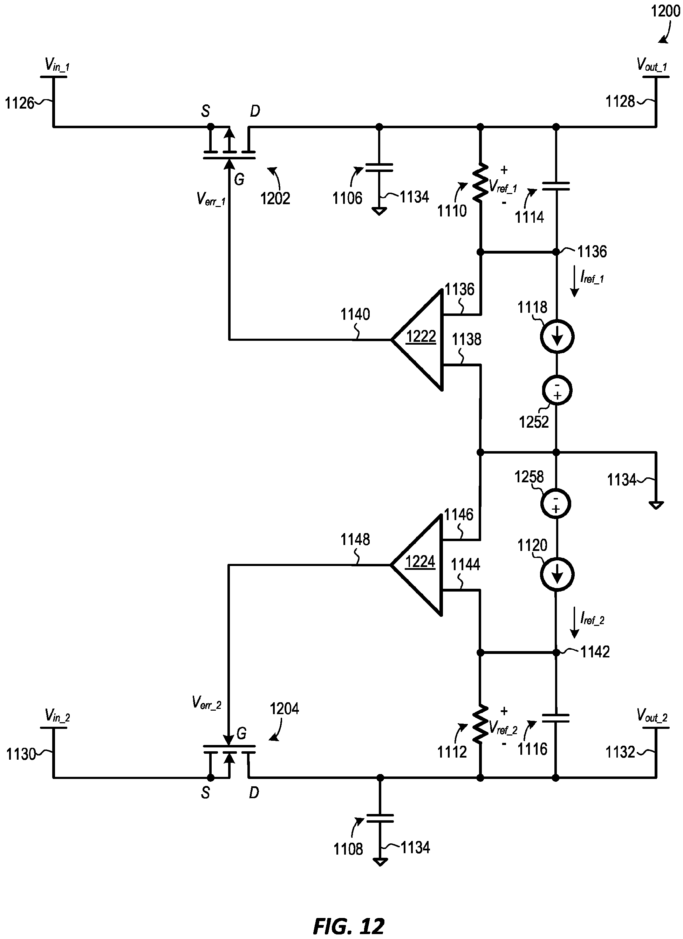

FIG. 12 is a schematic diagram of a low-noise voltage regulator 1200, which is an embodiment of low-noise voltage regulator 1100 (FIG. 11) where (a) first control and power stage 1102 is embodied by a transistor 1202 configured as a linear regulator power stage, (b) second control and power stage 1104 is embodied by a transistor 1204 configured as a linear regulator power stage, (c) first error amplifier 1122 is embodied by a first error amplifier 1222, and (d) second error amplifier 1124 is embodied by a second error amplifier 1224. Low-noise voltage regulator 1200 further includes a voltage source 1252 electrically coupled in series with first reference current source 1118 and a voltage source 1258 electrically coupled in series with second reference current source 1120. Transistor 1202 is a P-channel enhancement mode FET with a source S electrically coupled to first input power node 1126, a drain D electrically coupled to first output power node 1128, and a gate G electrically coupled to output port 1140 of first error amplifier 1222. First error amplifier 1222 is a voltage amplifier configured to generate a voltage first error signal $V_{err\_1}$ for driving gate G of transistor 1202. Transistor 1204 is an N-channel enhancement mode FET with a source S electrically coupled to second input power node 1130, a drain D electrically coupled to second output power node 1132, and a gate G electrically coupled to output port 1148 of second error amplifier 1224. Second error amplifier 1224 is a voltage amplifier configured to generate a voltage second error signal $V_{err\_2}$ for driving gate G of transistor 1204.

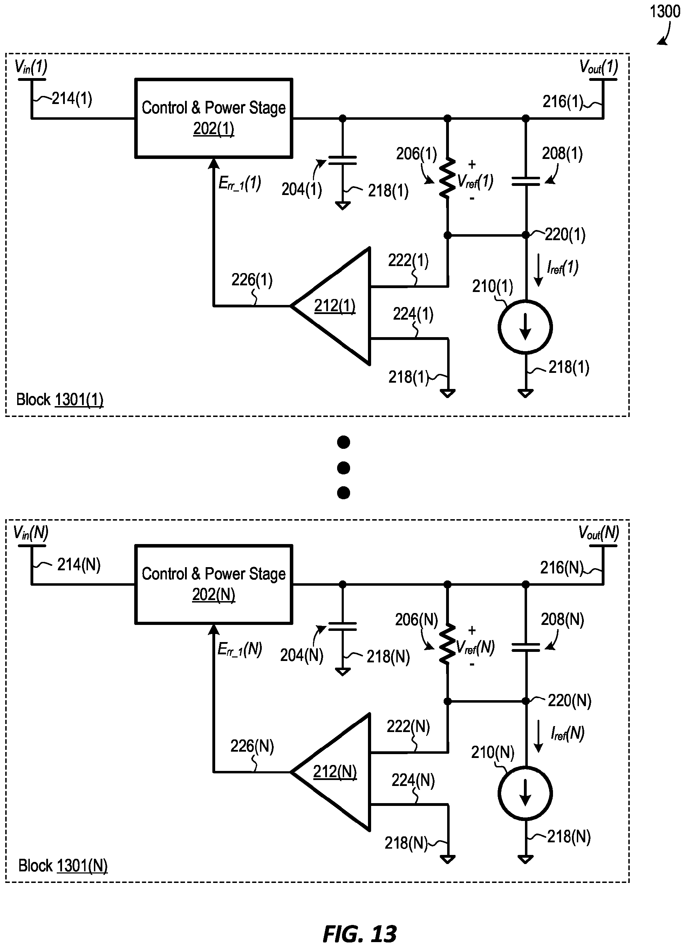

FIG. 13 is a schematic diagram of a multi-output, low-noise voltage regulator 1300, which is another embodiment of the new low-noise voltage regulators disclosed herein having multiple outputs. Low-noise voltage regulator 1300 include N blocks 1301, where N is an integer greater than one. In this document, specific instances of an item may be referred to by use of a numeral in parentheses (e.g. block 1301(1)) while numerals without parentheses refer to any such item (e.g. blocks 1301). Each block 1301 includes an instance of the elements of low-noise voltage regulator 200 (FIG. 2). Accordingly, low-noise voltage regulator 1300 has N output power nodes 216, where each output power node 216 has a respective output voltage $V_{out}$. Each block 1301 need not have the same configuration. For example, polarity of reference current source 210 could vary between two or more blocks 1301 such that polarity of output voltage $V_{out}$ varies between the two or more blocks 1301. As another example, configuration of control and power stage 202 could vary among blocks 1301. For example, in one block 1301, control and power stage 202 could include a switching power converter power stage, while in another block 1301, control and power stage 202 could include a linear regulator power stage.

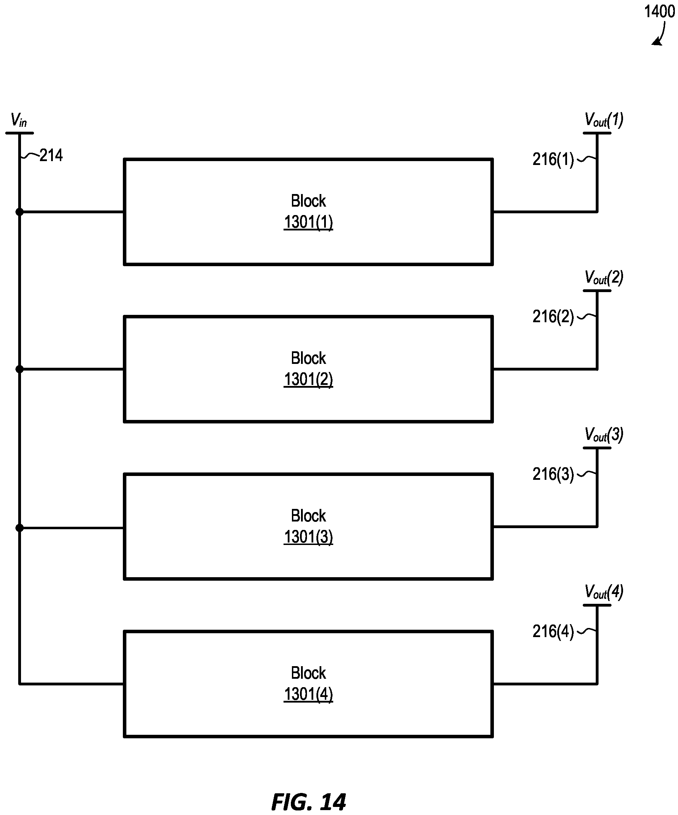

While FIG. 13 depicts blocks 1301 as being discrete elements, two or more blocks 1301 may share one or nodes or even one or more components. For example, in some embodiments, blocks 1301 share a common ground node 218 and/or a common input power node 214. For instance, FIG. 14 is a block diagram of a low-noise voltage regulator 1400, which is an embodiment of low-noise voltage regulator 1300 where (i) N=4, (ii) all four blocks 1301 share a common input power node 214 and therefore have a common input voltage $V_{in}$. Each block 1301, though, has a different respective output power node 216 and corresponding output voltage $V_{out}$. Details of blocks 1301 are not shown in FIG. 14 for illustrative clarity.

As another example, in some alternate embodiments, two or more blocks 1301 share a common input power node 214 and a common power output node 216, such that the blocks 1301 are electrically coupled in parallel. In these alternate embodiments, the low-noise voltage regulator optionally further includes current sharing circuitry (not shown), to help achieve equal sharing of current among blocks 1301.

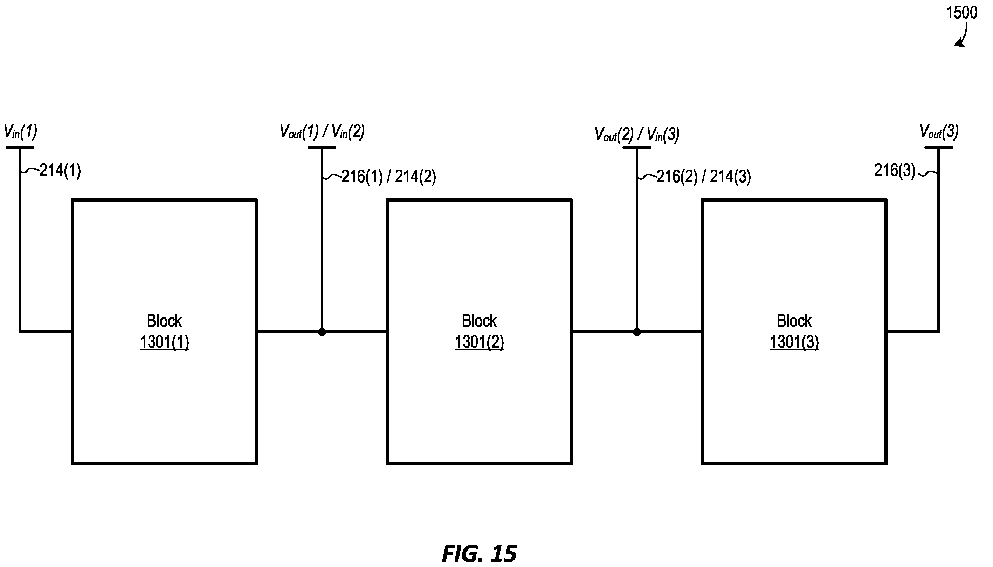

Referring again to FIG. 13, in certain embodiments, two or more blocks 1301 are electrically coupled in series. For example, FIG. 15 is a block diagram of a low-noise voltage regulator 1500, which is an embodiment of low-noise voltage regulator 1300 where (i) N=3 and (ii) blocks 1301 are electrically coupled in series. Details of blocks 1301 are not shown in FIG. 15 for illustrative clarity. In low-noise voltage regulator 1500, output power node 216(1) of block 1301(1) is the same node as input power node 214(2) of block 1301(2), such that output voltage $V_{out}(1)$ of block 1301(1) is the same as input voltage $V_{in}(2)$ of block 1301(2). Additionally, output power node 216(2) of block 1301(2) is the same node as input power node 214(3) of block 1301(3), such that output voltage $V_{out}(2)$ of block 1301(2) is the same as input voltage $V_{in}(3)$ of block 1301(3).

## Combinations of Features

Features described above may be combined in various ways without departing from the scope hereof. The following examples illustrate some possible combinations.

(A1) A low-noise voltage regulator includes (1) an error amplifier configured to generate an error signal that is proportional to a difference between a voltage at a ground node and a voltage at a set node, (2) a reference resistor electrically coupled between an output power node and the set node, (3) a reference current source electrically coupled to the set node, and (4) a control and power stage electrically coupled between an input power node and the output power node. The control and power stage is configured to convert an input voltage to an output voltage in response to the error signal to minimize a magnitude of the error signal, where the input voltage is a voltage at the input power node and the output voltage is a voltage at the output power node.

(A2) The low-noise voltage regulator denoted as (A1) may further include a reference capacitor electrically coupled in parallel with the reference resistor.

(A3) In either of the low-noise voltage regulators denoted as (A1) or (A2), (1) the first input port of the error amplifier may be connected to the set node, and (2) a second input port of the error amplifier may be connected to the ground node.

(A4) Any one of the low-noise voltage regulators denoted as (A1) through (A3) may further include a voltage source electrically coupled in series with the reference current source.

(A5) In the low-noise voltage regulator denoted as (A4), the voltage source may include a charge pump.

(A6) In the low-noise voltage regulator denoted as (A4), (1) the voltage source may include a charge pump and a linear regulator, and (2) the linear regulator may be configured to convert a voltage generated by the charge pump to a voltage of the voltage source.

(A7) In any one of the low-noise voltage regulators denoted as (A1) through (A6), the reference current source may be configured to generate a reference current signal that flows away from the set node, such that the output voltage is positive with respect to the ground node.

(A8) In any one of the low-noise voltage regulators denoted as (A1) through (A6), the reference current source may be configured to generate a reference current signal that flows toward the ground node, such that the output voltage is negative with respect to the ground node.

(A9) In any one of the low-noise voltage regulators denoted as (A1) through (A8), the control and power stage may include a switching power converter power stage.

(A10) In any one of the low-noise voltage regulators denoted as (A1) through (A8), the control and power stage may include a linear regulator power stage.

(A11) In any one of the low-noise voltage regulators denoted as (A1) through (A8), the low-noise voltage regulator may have a boost topology.

(A12) In any one of the low-noise voltage regulators denoted as (A1) through (A8), the low-noise voltage regulator may have a buck-boost topology.

(A13) In any one of the low-noise voltage regulators denoted as (A1) through (A8), the low-noise voltage regulator may have a single-ended primary inductor converter (SEPIC) topology.

(B1) A multi-output, low-noise voltage regulator includes a first error amplifier, a first reference resistor, a first reference current source, a first control and power stage, a second error amplifier, a second reference resistor, a second reference current source, and a second control and power stage. The first error amplifier is configured to generate a first error signal that is proportional to a difference between a voltage at a first ground node and a voltage at a first set node, the first reference resistor is electrically coupled between a first output power node and the first set node, and the first reference current source is electrically coupled to the first set node. The first control and power stage is electrically coupled between a first input power node and the first output power node, and the first control and power stage is configured to convert a first input voltage to a first output voltage in response to the first error signal to minimize a magnitude of the first error signal. The first input voltage is a voltage at the first input power node, and the first output voltage is a voltage at the first output power node. The second error amplifier is configured to generate a second error signal that is proportional to a difference between a voltage of a second ground node and a voltage at a second set node, the second reference resistor is electrically coupled between a second output power node and the second set node, and the second reference current source electrically coupled to the second set node. The second control and power stage is electrically coupled between a second input power node and the second output power node, and the second control and power stage is configured to convert a second input voltage to a second output voltage in response to the second error signal to minimize a magnitude of the second error signal. The second input voltage is a voltage at the second input power node, and the second output voltage is a voltage at the second output power node.

(B2) The multi-output, low noise voltage regulator denoted as (B 1) may further include (1) a first reference capacitor electrically coupled in parallel with the first reference resistor and (2) a second reference capacitor electrically coupled in parallel with the second reference resistor.

(B3) In either one of the multi-output, low-noise voltage regulators denoted as (B 1) or (B2), (1) the first ground node and the second ground node may be a common ground node, (2) the first reference current source may be configured to generate a first reference current signal that flows away from the first set node, such that the first output voltage is positive with respect to the common ground node, and (3) the second reference current source may be configured to generate a second reference current signal that flows toward the second set node, such that the second output voltage is negative with respect to the common ground node.

(C1) A method for controlling a low-noise voltage regulator includes (1) establishing a voltage having a first magnitude across a reference resistor electrically coupled between an output power node of the low-noise voltage regulator and a set node of the low-noise voltage regulator, where the first magnitude is a desired magnitude of an output voltage and the output voltage is a voltage on the output power node of the low-noise voltage regulator, (2) generating an error signal representing a difference between a voltage of the set node of the low-noise voltage regulator and a voltage of a ground node, and (3) controlling a control and power stage electrically coupled between an input power node and the output power node in response to the error signal, where the control and power stage is configured to convert an input voltage to the output voltage in response to the error signal to minimize a magnitude of the error signal, and the input voltage is a voltage at the input power node.

(C2) The method denoted as (C1) may further include filtering noise across the reference resistor using a capacitor electrically coupled in parallel with the reference resistor.

(C3) In either one of the methods denoted as (C1) or (C2), establishing the voltage having the first magnitude across the reference resistor may include applying a reference current signal to the reference resistor.

(C4) The method denoted as (C3) may further include generating the reference current signal using a linear regulator that is powered from the input power node.

Changes may be made in the above methods, devices, and systems without departing from the scope hereof. It should thus be noted that the matter contained in the above description and shown in the accompanying drawings should be interpreted as illustrative and not in a limiting sense. The following claims are intended to cover generic and specific features described herein, as well as all statements of the scope of the present method and system, which as a matter of language, might be said to fall therebetween.

There follows a list of numbered features defining particular embodiments of the present disclosure. Where a numbered feature refers to one or more earlier numbered features then those features should be considered together in combination.

1. A low-noise voltage regulator, comprising:

   an error amplifier configured to generate an error signal that is proportional to a difference between a voltage at a ground node and a voltage at a set node;
   a reference resistor electrically coupled between an output power node and the set node;
   a reference current source electrically coupled to the set node; and
   a control and power stage electrically coupled between an input power node and the output power node, the control and power stage being configured to convert an input voltage to an output voltage in response to the error signal to minimize a magnitude of the error signal, the input voltage being a voltage at the input power node and the output voltage being a voltage at the output power node.

2. The low-noise voltage regulator of feature 1, further comprising a reference capacitor electrically coupled in parallel with the reference resistor.

3. The low-noise voltage regulator of feature 1 or 2, wherein:

   a first input port of the error amplifier is connected to the set node; and
   a second input port of the error amplifier is connected to the ground node.

4. The low-noise voltage regulator of any of features 1 to 3, further comprising a voltage source electrically coupled in series with the reference current source.

5. The low-noise voltage regulator of feature 4, wherein the voltage source comprises a charge pump.

6. The low-noise voltage regulator of feature 4 or 5, wherein:

   the voltage source comprises a charge pump and a linear regulator; and
   the linear regulator is configured to convert a voltage generated by the charge pump to a voltage of the voltage source.

7. The low-noise voltage regulator of any of features 1 to 6, wherein the reference current source is configured to generate a reference current signal that flows away from the set node, such that the output voltage is positive with respect to the ground node.

8. The low-noise voltage regulator of any of features 1 to 7, wherein the reference current source is configured to generate a reference current signal that flows toward the ground node, such that the output voltage is negative with respect to the ground node.

9. The low-noise voltage regulator of any of features 1 to 8, wherein the control and power stage comprises a switching power converter power stage.

10. The low-noise voltage regulator of any of features 1 to 9, wherein the control and power stage comprises a linear regulator power stage.

11. The low-noise voltage regulator of any of features 1 to 10, wherein the low-noise voltage regulator has a boost topology.

12. The low-noise voltage regulator of any of features 1 to 11, wherein the low-noise voltage regulator has a buck-boost topology.

13. The low-noise voltage regulator of any of features 1 to 12, wherein the low-noise voltage regulator has a single-ended primary inductor converter (SEPIC) topology.

14. A multi-output, low-noise voltage regulator, comprising:

a first error amplifier configured to generate a first error signal that is proportional to a difference between a voltage at a first ground node and a voltage at a first set node;
a first reference resistor electrically coupled between a first output power node and the first set node;
a first reference current source electrically coupled to the first set node;
a first control and power stage electrically coupled between a first input power node and the first output power node, the first control and power stage being configured to convert a first input voltage to a first output voltage in response to the first error signal to minimize a magnitude of the first error signal, the first input voltage being a voltage at the first input power node and the first output voltage being a voltage at the first output power node;
a second error amplifier configured to generate a second error signal that is proportional to a difference between a voltage of a second ground node and a voltage at a second set node;
a second reference resistor electrically coupled between a second output power node and the second set node;
a second reference current source electrically coupled to the second set node; and
a second control and power stage electrically coupled between a second input power node and the second output power node, the second control and power stage being configured to convert a second input voltage to a second output voltage in response to the second error signal to minimize a magnitude of the second error signal, the second input voltage being a voltage at the second input power node and the second output voltage being a voltage at the second output power node.

15. The multi-output, low noise voltage regulator of feature 14, further comprising;

a first reference capacitor electrically coupled in parallel with the first reference resistor; and
a second reference capacitor electrically coupled in parallel with the second reference resistor.

16. The multi-output, low-noise voltage regulator of feature 14 or 15, wherein:

the first ground node and the second ground node are a common ground node;
the first reference current source is configured to generate a first reference current signal that flows away from the first set node, such that the first output voltage is positive with respect to the common ground node; and
the second reference current source is configured to generate a second reference current signal that flows toward the second set node, such that the second output voltage is negative with respect to the common ground node.

17. A method for controlling a low-noise voltage regulator, the method comprising:

establishing a voltage having a first magnitude across a reference resistor electrically coupled between an output power node of the low-noise voltage regulator and a set node of the low-noise voltage regulator, the first magnitude being a desired magnitude of an output voltage, the output voltage being a voltage on the output power node of the low-noise voltage regulator;

generating an error signal representing a difference between a voltage of the set node of the low-noise voltage regulator and a voltage of a ground node; and

controlling a control and power stage electrically coupled between an input power node and the output power node in response to the error signal, the control and power stage being configured to convert an input voltage to the output voltage in response to the error signal to minimize a magnitude of the error signal, the input voltage being a voltage at the input power node.

18. The method of feature 17, further comprising filtering noise across the reference resistor using a capacitor electrically coupled in parallel with the reference resistor.

19. The method of feature 17 or 18, wherein establishing the voltage having the first magnitude across the reference resistor comprises applying a reference current signal to the reference resistor.

20. The method of feature 19, further comprising generating the reference current signal using a linear regulator that is powered from the input power node.

## Claims

1. A low-noise voltage regulator, comprising:

   an error amplifier configured to generate an error signal that is proportional to a difference between a voltage at a ground node and a voltage at a set node;
   a reference resistor electrically coupled between an output power node and the set node;
   a reference current source electrically coupled to the set node; and
   a control and power stage electrically coupled between an input power node and the output power node, the control and power stage being configured to convert an input voltage to an output voltage in response to the error signal to minimize a magnitude of the error signal, the input voltage being a voltage at the input power node and the output voltage being a voltage at the output power node.

2. The low-noise voltage regulator of claim 1, further comprising a reference capacitor electrically coupled in parallel with the reference resistor.

3. The low-noise voltage regulator of claim 1 or 2, wherein:

   a first input port of the error amplifier is connected to the set node; and
   a second input port of the error amplifier is connected to the ground node.

4. The low-noise voltage regulator of any of claims 1 to 3, further comprising a voltage source electrically coupled in series with the reference current source; wherein the voltage source optionally comprises a charge pump.

5. The low-noise voltage regulator of claim 4, wherein:

   the voltage source comprises a charge pump and a linear regulator; and
   the linear regulator is configured to convert a voltage generated by the charge pump to a voltage of the voltage source.

6. The low-noise voltage regulator of any of claims 1 to 5, wherein the reference current source is configured to generate a reference current signal that flows away from the set node, such that the output voltage is positive with respect to the ground node.

7. The low-noise voltage regulator of any of claims 1 to 6, wherein the reference current source is configured to generate a reference current signal that flows toward the ground node, such that the output voltage is negative with respect to the ground node.

8. The low-noise voltage regulator of any of claims 1 to 7, wherein the control and power stage comprises:

   a) a switching power converter power stage; or

b) a linear regulator power stage.

9. The low-noise voltage regulator of any of claims 1 to 8, wherein the low-noise voltage regulator has at least one of:

a) a boost topology;
b) a buck-boost topology; or
c) a single-ended primary inductor converter (SEPIC) topology.

10. A multi-output, low-noise voltage regulator, comprising:

a first low noise voltage regulator, being a low-noise voltage regulator according to any of claims 1 to 9, wherein:

the error amplifier of the first low noise voltage regulator is a first error amplifier configured to generate a first error signal that is proportional to a difference between a voltage at a first ground node and a voltage at a first set node;
the reference resistor of the first low noise voltage regulator is a first reference resistor electrically coupled between a first output power node and the first set node;
the reference current source of the first low noise voltage regulator is a first reference current source electrically coupled to the first set node; and
the control and power stage of the first low noise voltage regulator is a first control and power stage electrically coupled between a first input power node and the first output power node, the first control and power stage being configured to convert a first input voltage to a first output voltage in response to the first error signal to minimize a magnitude of the first error signal, the first input voltage being a voltage at the first input power node and the first output
voltage being a voltage at the first output power node;

the multi-output, low-noise voltage regulator further comprising:
a second low noise voltage regulator, being a low-noise voltage regulator according to any of claims 1 to 9, wherein

the error amplifier of the second low noise voltage regulator is a second error amplifier configured to generate a second error signal that is proportional to a difference between a voltage of a second ground node and a voltage at a second set node;
the reference resistor of the second low noise voltage regulator is a second reference resistor electrically coupled between a second output power node and the second set node;
the reference current source of the second low noise voltage regulator is a second reference current source electrically coupled to the second set node; and the control and power stage of the second low noise voltage regulator is a second control and power stage electrically coupled between a second input power node and the second output power node, the second control and power stage being configured to convert a second input voltage to a second output voltage in response to the second error signal to minimize a magnitude of the second error signal, the second input voltage being a voltage at the second input power node and the second output voltage being a voltage at the second output power node.

11. The multi-output, low noise voltage regulator of claim 10, further comprising;

a first reference capacitor electrically coupled in parallel with the first reference resistor; and
a second reference capacitor electrically coupled in parallel with the second reference resistor.

12. The multi-output, low-noise voltage regulator of claim 10 or 11, wherein:

the first ground node and the second ground node are a common ground node;
the first reference current source is configured to generate a first reference current signal that flows away from the first set node, such that the first output voltage is positive with respect to the common ground node; and
the second reference current source is configured to generate a second reference current signal that flows toward the second set node, such that the second output voltage is negative with respect to the common ground node.

13. A method for controlling a low-noise voltage regulator, the method comprising:

establishing a voltage having a first magnitude across a reference resistor electrically coupled between an output power node of the low-noise voltage regulator and a set node of the low-noise voltage regulator, the first magnitude being a desired magnitude of an output voltage, the output voltage being a voltage on the output power node of the low-noise voltage regulator;

generating an error signal representing a difference between a voltage of the set node of the low-noise voltage regulator and a voltage of a ground node; and

controlling a control and power stage electrically coupled between an input power node and the output power node in response to the error signal, the control and power stage being configured to convert an input voltage to the output voltage in response to the error signal to minimize a magnitude of the error signal, the input voltage being a voltage at the input power node.

14. The method of claim 13, further comprising filtering noise across the reference resistor using a capacitor electrically coupled in parallel with the reference resistor.

15. The method of claim 13 or 14, wherein establishing the voltage having the first magnitude across the reference resistor comprises applying a reference current signal to the reference resistor; the method optionally further comprising generating the reference current signal using a linear regulator that is powered from the input power node.

**FIG. 1**

**FIG. 2**

**FIG. 3**

**FIG. 4**

**FIG. 7**

EP 4 629 493 A1

**FIG. 8**

EP 4 629 493 A1

**FIG. 9**

EP 4 629 493 A1

**FIG. 10**

**FIG. 11**

**FIG. 12**

1300

*FIG. 13*

1400

$V_{in}$

~214

$V_{out}(1)$

216(1)~

Block
1301(1)

$V_{out}(2)$

216(2)~

Block
1301(2)

$V_{out}(3)$

216(3)~

Block
1301(3)

$V_{out}(4)$

216(4)~

Block
1301(4)

**FIG. 14**

**FIG. 15**

EP 4 629 493 A1

Europäisches
Patentamt

European
Patent Office

Office européen
des brevets

# EUROPEAN SEARCH REPORT

**Application Number**

EP 25 16 3541

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/315849 A1 (GERRITSEN STEVEN JAN [NL]) 25 December 2008 (2008-12-25) * paragraph [0004] - paragraph [0029] * * paragraph [0040] - paragraph [0042] * * figures 2-5,8 * | 1-15 | INV. H02M1/00 G05F1/56 H02M3/155 H02M3/158 |
| X | CN 112 332 667 A (58TH RES INSTITUTE CETC) 5 February 2021 (2021-02-05) * the whole document * | 1-15 | ADD. H02M3/07 |
| A | US 2006/267562 A1 (SZEPESI THOMAS [US]) 30 November 2006 (2006-11-30) * paragraphs [0006], [0029] * * figure 1 * | 4,5 | |

TECHNICAL FIELDS
SEARCHED (IPC)

H02M
G05F

The present search report has been drawn up for all claims

| Place of search | Date of completion of the search | Examiner |
|---|---|---|
| The Hague | 22 July 2025 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 16 3541

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | Publication date | Patent family member(s) | | Publication date |
|---|---|---|---|---|---|
| US 2008315849 | A1 | 25-12-2008 | CN | 101036282 A | 12-09-2007 |
| | | | EP | 1779500 A2 | 02-05-2007 |
| | | | JP | 2008509649 A | 27-03-2008 |
| | | | US | 2008315849 A1 | 25-12-2008 |
| | | | WO | 2006016319 A2 | 16-02-2006 |
| CN 112332667 | A | 05-02-2021 | NONE | | |
| US 2006267562 | A1 | 30-11-2006 | NONE | | |

EPO FORM P0459

For more details about this annex : see Official Journal of the European Patent Office, No. 12/82

**EP 4 629 493 A1**

**Patent documents cited in the description**

- US 60793424